(19) Europäisches Patentamt
European Patent Office
Office européen des brevets

(11) **EP 4 507 023 A2**

(12) **EUROPEAN PATENT APPLICATION**

(43) Date of publication:
**12.02.2025 Bulletin 2025/07**

(21) Application number: **24185240.9**

(22) Date of filing: **28.06.2024**

(51) International Patent Classification (IPC):
**H01M 4/133** (2010.01)    **H01M 4/587** (2010.01)
**H01M 10/0525** (2010.01)    **H01M 10/0569** (2010.01)
**H01M 4/02** (2006.01)

(52) Cooperative Patent Classification (CPC):
**H01M 10/0525; H01M 4/133; H01M 4/587;**
**H01M 10/0569;** H01M 2004/021; H01M 2004/027;
Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.07.2023 CN 202310917557**

(71) Applicant: **CALB Group Co., Ltd.**
**Changzhou City, Jiangsu Province (CN)**

(72) Inventors:
• **GUO, Dexiang**
**Changzhou City, Jiangsu Province (CN)**
• **FANG, Chuanzhen**
**Changzhou City, Jiangsu Province (CN)**
• **SHEN, Taotao**
**Changzhou City, Jiangsu Province (CN)**
• **QIAO, Zhi**
**Changzhou City, Jiangsu Province (CN)**
• **SHAN, Xuyi**
**Luoyang City, Henan Province (CN)**

(74) Representative: **Becker, Eberhard**
**Becker Kurig & Partner**
**Patentanwälte mbB**
**Bavariastraße 7**
**80336 München (DE)**

(54) **NEGATIVE ELECTRODE SHEET, SECONDARY BATTERY INCLUDING THE NEGATIVE ELECTRODE SHEET, AND ELECTRIC DEVICE**

(57) The present invention discloses a negative electrode sheet, a secondary battery including the negative electrode sheet, and an electric device, and belongs to the technical field of batteries. The negative electrode sheet of the present invention includes a negative electrode current collector and a negative electrode active material layer. The negative electrode active material layer includes an negative electrode active material, the negative electrode sheet satisfies an equation as follows: $0.15 \leq (F \times ps)/(\rho \times 100) \leq 10$, where F is a cohesive force of the negative electrode sheet, in the unit of N/m; ps is a particle size change rate of the negative electrode active material, in the unit of %; and $\rho$ is a compaction density of the negative electrode sheet, in the unit of $g/cm^3$. The present invention satisfies the above-mentioned equation by rationally controlling the negative electrode sheet so that the negative electrode sheet has a lower thickness expansion rate during the cycle, which helps to improve the gas generation of the battery and improve the cycle life of the battery.

EP 4 507 023 A2

**Description**

**BACKGROUND**

Technical Field

The present invention relates to the technical field of batteries, and more particularly, to a negative electrode sheet, a secondary battery including the negative electrode sheet, and an electric device.

Description of Related Art

The depletion of traditional petrochemical fuels and the pollution of the environment are becoming more and more serious. Electrical energy as a clean energy is being used more and more widely. At present, the electric vehicle industry is booming. The lithium ion battery has the advantages of high energy density, good cycle performance and environmental friendliness. Thus, it is widely used in the electric vehicle industry and energy storage field.

However, in the course of use, the problems of mileage decline and service life of automobiles severely restrict its development. In order to solve the above problems, one of the most effective methods is to improve the cycle life of battery, which is the core component of electric vehicle. The cycle life of the battery is related to a number of factors, such as electrode sheet expansion, battery gas generation, etc.

During the lithium battery manufacturing process, the positive electrode sheet, the negative electrode sheet, and the separator are usually assembled into a battery core using a winding or lamination apparatus. A circle of positive electrode is wrapped around a circle of negative electrode inside the battery with a winding structure, and the thickness expansion ratios of the positive electrode sheet and the negative electrode sheet are inconsistent. When the thickness expansion ratio of the negative electrode sheet is much greater than that of the positive electrode sheet, and accumulated to a certain extent, the deformation of the electrode sheets will occur and wrinkles will be generated, the wrinkles will easily lead to black spots and lithium precipitation in the battery, reduce the capacity of the battery, and thus shorten the service life of the battery.

As for gas generation, it is generally considered to be caused by the presence of side reactions in the electrochemical process, and its composition is complicated, containing oxygen ($O_2$), carbon dioxide ($CO_2$), carbon monoxide (CO), methane ($CH_4$), ethane ($C_2H_6$), etc. As the number of cycles increases, the generated gas is accumulated, and will threaten the internal pressure of the single battery after a certain amount, so that the cycle life of the battery decreases.

Therefore, how to improve the cycle life of a lithium ion battery has become a technical problem to be solved urgently by a person skilled in the art.

**SUMMARY**

An object of the present invention is to overcome the disadvantages of the prior art and to provide a negative electrode sheet, a secondary battery including the negative electrode sheet, and an electric device. The negative electrode sheet has a low thickness expansion rate during a cycle, which contributes to improve gas generation of the battery and improve the cycle life of the battery.

In order to achieve the above object, in a first aspect of the present invention, the present invention provides a negative electrode sheet including a negative electrode current collector and a negative electrode active material layer provided on at least one surface of the negative electrode current collector, the negative electrode active material layer including a negative electrode active material. The negative electrode sheet satisfies an equation as follows:

$$0.15 \leq (F \times ps)/(\rho \times 100) \leq 10;$$

in the equation, F is a cohesive force of the negative electrode sheet, in the unit of N/m;

ps is a Dv50 particle size change rate of the negative electrode active material before and after holding pressure for 30 seconds at a 4T pressure, in the unit of %; and
$\rho$ is a compaction density of the negative electrode sheet, in the unit of $g/cm^3$.

As an alternative embodiment of the present invention, the negative electrode sheet satisfies an equation as follows:

$$1.9 \leq (F \times ps)/(\rho \times 100) \leq 6.$$

As an alternative embodiment of the present invention, the negative electrode sheet satisfies an equation as follows:

$$0.3 \leq 1/ps + 7/\alpha \leq 1.2;$$

in the equation, $\alpha$ is a contact angle, in the unit of °, of the negative electrode active material layer with a solvent which is a mixed solution of ethylene carbonate and methyl ethyl carbonate in a weight ratio of 1 : 1.

As an alternative embodiment of the present invention, the negative electrode sheet satisfies an equation as follows:

$$0.33 \leq 1/ps + 7/\alpha \leq 0.5.$$

As an alternative embodiment of the present invention, the range of ps is from 1% to 20%.

As an alternative embodiment of the present invention, the range of ps is from 4.5% to 14%.

As an alternative embodiment of the present invention, the range of F is from 10 N/m to 80 N/m.

As an alternative embodiment of the present invention, the range of F is from 25 N/m to 65 N/m.

As an alternative embodiment of the present invention, the range of p is from 1.3 g/$cm^3$ to 1.8 g/$cm^3$.

As an alternative embodiment of the present invention, the range of p is from 1.45 g/$cm^3$ to 1.7g/$cm^3$.

As an alternative embodiment of the present invention, the range of $\alpha$ is from 20° to 50°.

As an alternative embodiment of the present invention, the range of $\alpha$ is from 22° to 31°.

As an alternative embodiment of the present invention, the negative electrode active material includes a carbon material including at least one of synthetic graphite, natural graphite, hard carbon, soft carbon, and mesocarbon microbeads.

In a second aspect of the present invention, the present invention provides a secondary battery including a positive electrode sheet, a negative electrode sheet which is the above-mentioned negative electrode sheet, and an electrolyte solution.

In a third aspect of the present invention, the present invention provides an electric device including the secondary battery.

The present invention has the following beneficial effects.

The present invention enables the negative electrode sheet to have a lower thickness expansion rate during a high-temperature cycle by rationally controlling the cohesive force and the compaction density of the negative electrode sheet, as well as the contact angle between the negative electrode active material layer in the negative electrode sheet and the solvent, and the particle size change rate of the negative electrode active material, such that the gas generation of the battery and the cycle life of the battery are improved.

**DESCRIPTION OF THE EMBODIMENTS**

In order to make the objectives, technical solutions, and advantages of embodiments of the invention clearer, the technical solutions in the embodiments of the invention will be described clearly and completely below. Obviously, the described embodiments are part of the invention, rather than all of the embodiments. Based on the embodiments in the invention, all other embodiments obtained by a person skilled in the art without involving any inventive effort are within the scope of protection of the invention.

In the present invention, among the technical features which are described in an open manner, it includes a closed technical solution consisting of the recited features as well as an open technical solution containing the recited features.

In the present invention, reference is made to numerical ranges which are, unless otherwise indicated, to be considered continuous and to include both the minimum and maximum values of the range, and every value between the minimum and maximum values. Further, when a range refers to an integer, every integer between the minimum and maximum values of the range is included. Further, when multiple ranges are provided to describe a feature or characteristic, the ranges can be combined. In other words, unless otherwise indicated, all ranges disclosed herein are to be understood to include any and all subranges subsumed therein.

In the present invention, the specific dispersion and stirring treatment methods are not particularly limited.

Where the reagents or instruments used in the invention are not specified by the manufacturer, they are conventional products commercially available.

An embodiment of the present invention provides a negative electrode sheet including a negative electrode current collector and a negative electrode active material layer provided on at least one surface of the negative electrode current collector, the negative electrode active material layer including a negative electrode active material. The negative electrode sheet satisfies an equation as follows:

$$0.15 \leq (F \times ps)/(\rho \times 100) \leq 10;$$

in the equation, F is a cohesive force of the negative electrode sheet, in the unit of N/m;

ps is a Dv50 particle size change rate of the negative electrode active material before and after holding pressure for 30 seconds at a 4T pressure, in the unit of %; and
$\rho$ is a compaction density of the negative electrode sheet, in the unit of g/cm$^3$.

The present invention enables the negative electrode sheet to have a lower thickness expansion rate during cycling by rationally controlling the cohesive force and the compaction density of the negative electrode sheet, as well as the contact angle between the negative electrode active material layer in the negative electrode sheet and the solvent, and the particle size change rate of the negative electrode active material, and after the negative electrode sheet is applied to the secondary battery, the gas generation of the battery and the cycle life of the battery are improved.

In the present invention, the particle size change rate (ps) of the negative electrode active material is calculated from the change in Dv50 of the negative electrode active material before and after holding pressure for 30 seconds at a pressure of 4T. The negative electrode active material generally includes primary particles and/or secondary particles. After the negative electrode active material is held pressure at 4T pressure for 30 seconds, the secondary particles may be broken into multiple smaller particles, or the primary particles and/or secondary particles may be broken to some extent. The particle size change rate of the negative electrode active material is related to the particle strength. In general, the lower the particle size change rate is, the higher the particle strength is. The inventors have found that, with regard to the negative electrode active material, the higher the particle size change rate is, the lower the particle strength is and the lower the rebound rate of the particles under the action of external stress is. The negative electrode sheet made of the negative electrode active material with the higher particle size change rate has a relatively lower thickness expansion rate during cycling, which contributes to the improvement of the cycle life of the battery. However, when the particle size change rate is too high, the new interface generated by the crushing of the negative electrode active material is relatively more, so that too much active lithium is consumed, resulting in a decrease in the cycle life of the battery. In addition, when the particle size change rate of the negative electrode active material is too high, the lithium ions in the negative electrode may undergo an excessive irreversible oxidation reaction due to an excessive number of crushed or pulverized particles, thereby resulting in an increase in the amount of gas generated during storage of the battery at high temperature.

The increase in the compaction density ($\rho$) of the negative electrode sheet helps to improve the electron conducting properties of the electrode sheet and reduces the internal resistance of the battery. However, an increase in the compaction density may also result in a higher particle size change rate of the negative electrode active material, resulting in consumption of active lithium. At the same time, the compaction density is also related to the porosity of the electrode sheet. When the compaction density is too high, the porosity of the negative electrode sheet decreases, resulting in a decrease in the liquid absorption efficiency of the electrode sheet for the electrolyte solution. When the compaction density is low, the interior of the negative electrode sheet may have larger pores and channels in which gas is more likely to accumulate and be generated.

The cohesive force (F) reflects the bonding force between the particles of the negative electrode active material. Under a suitable cohesive force, the negative electrode sheet has good structural stability, which helps to reduce the loose degree between the particles, improve the cycle life of the battery, reduce the gas generation, and inhibit the electrode sheet from increasing in thickness during the cycle. When the cohesive force is too high, the negative electrode active material may become too close to each other, and the permeability of the electrolyte solution may be hindered, so that the cycle life of the battery may be reduced.

The particle size change rate, compaction density and cohesive force affect the thickness increase rate of the negative electrode sheet during cycling, the gas generation and cycling performance of the battery to varying degrees, and have a certain mutual influence. It is difficult to control the battery to achieve lower gas generation and electrode sheet thickness expansion rate and higher cycling performance by controlling a single variable. By reasonably controlling F, ps, and $\rho$ so as to satisfy the above-indicated equation, the present invention allows the negative electrode sheet of the battery to have a lower thickness expansion rate during cycling, and thus the gas generation and cycle life of the battery are improved.

Exemplarily, in the present invention, the value of $(F \times ps)/(\rho \times 100)$ may be 0.15, 0.2, 0.3, 0.5, 0.8, 1.0, 2.0, 5.0, 8.0 and 10.0, or an interval range of any two of the above values.

In one of the implementations, the negative electrode sheet satisfies an equation as follows:

$$1.9 \leq (F \times ps)/(\rho \times 100) \leq 6.$$

When the particle size change rate, the compaction density and the cohesive force of the negative electrode sheet also satisfy the above-mentioned equation, the cohesive force, the compaction density of the negative electrode sheet and the particle size change rate of the negative electrode active material are in a more suitable range, so that when the prepared negative electrode sheet is use in a secondary battery, the expansion rate of the negative electrode sheet is lower, the gas generation of the battery is less, and the cycle performance is better.

In one of the implementations, the negative electrode sheet satisfies an equation as follows:

$$0.3 \leq 1/ps + 7/\alpha \leq 1.2;$$

in the equation, $\alpha$ is a contact angle, in the unit of °, of the negative electrode active material layer with a solvent which is a mixed solution of ethylene carbonate and methyl ethyl carbonate in a weight ratio of 1 : 1.

In an alternative implementation, the negative electrode sheet satisfies an equation as follows:

$$0.33 \leq 1/ps + 7/\alpha \leq 0.5.$$

Ethylene carbonate and methyl ethyl carbonate are commonly used electrolyte solvents in lithium ion batteries. The contact angle ($\alpha$) between the mixed solvent and the negative electrode active material layer reflects the wetting degree of the negative electrode sheet to the electrolyte solvent. The size of the contact angle is related to the particle size distribution of the negative electrode active material, the compaction density of the negative electrode sheet, and the tightness between particles of the negative electrode active material, etc. A relatively small contact angle indicates that the electrolyte solution can better penetrate into the electrode sheet, avoiding the increase of resistance and lithium precipitation caused by insufficient liquid absorption, and thus improving the cycle life of the battery.

When the values of $\alpha$ and ps of the negative electrode material is reasonably controlled to satisfy the value of $1/ps + 7/\alpha$ being 0.3-1.2, the contact angle of the negative electrode active material layer and the particle size change rate of the negative electrode active material are both in an appropriate range, the gas generation of the prepared negative electrode sheet is lower and the cycle life is relatively higher.

Exemplarily, in the present invention, the value of $1/ps + 7/\alpha$ may be 0.3, 0.35, 0.4, 0.5, 0.7, 1.0 and 1.2, or an interval range of any two of the values.

In one of the implementations, the range of ps is from 1% to 20%. For example, the value of ps may be 1%, 2%, 5%, 10%, 15%, 18%, or 20%.

In an alternative implementation, the range of ps is from 3% to 13%.

Within the range of ps, the particle size change rate of the negative electrode active material is appropriate, which contributes to a relatively low thickness expansion rate of the negative electrode sheet during the cycle, a small consumption of active lithium, a high cycle life of the battery and a low gas generation.

With regard to the method for detecting the particle size change rate ps, it is not limited in the present invention, and a person skilled in the art would have been able to detect the particle size change rate of the negative electrode active material according to conventional technical means. Exemplarily, ps may be detected using the following method.

The lithium ion battery was disassembled to obtain a negative electrode sheet. The negative electrode sheet was soaked in dimethyl carbonate (DMC) at room temperature for 60 minutes. The negative electrode sheet was taken out and dried at room temperature with a humidity of ≤15%. The negative electrode active material layer on the surface of the current collector was scraped off and was dissolved in an inorganic acid (such as hydrochloric acid), washed, stirred, filtered and dried. The resultant was then dissolved in distilled water, stirred to wash away hydrochloric acid on the surface, and dried to obtain a negative electrode active material.

The negative electrode active material was dispersed in deionized water containing a dispersant (a nonylphenol polyoxyethylene ether with a content of 0.03 wt%) to form a mixture. The mixture was sonicated for 2 minutes, and then placed into a particle size tester to perform a Dv50 test, so as to obtain a Dv50 before holding pressure, which is recorded as a $D_V50_{before}$ pressure.

Then the solid-liquid separation and drying on the mixture containing the negative electrode active material was performed to obtain the negative electrode active material again, and the negative electrode active material was held pressure by a powder compactor under a pressure of 4T for 30 seconds. After holding pressure, the negative electrode active material was taken out to perform a Dv50 test again in a particle size tester according to the above-mentioned method to obtain a Dv50 after holding pressure, recorded as $DV50_{after\ pressure}$. The particle size change rate ps of the negative electrode active material can be obtained by calculation:

$$ps = (D_V50_{\text{before pressure}} - D_V50_{\text{after pressure}})/D_V50_{\text{before pressure}} \times 100\%;$$

where Dv50 is the particle size corresponding to when the cumulative volume distribution percentage of the negative electrode active material reaches 50%, in the unit of $\mu$m.

The particle size change rate of the negative electrode active material was related to various factors, and may be controlled by adjusting the raw preparation material of the negative electrode active material, the pulverization conditions and the heat treatment conditions in the preparation process. It is also possible to obtain a negative electrode active material having a specific particle size change rate by mass screening.

In one of the implementations, the range of F is from 10 N/m to 80 N/m. For example, the F may be 10 N/m, 12 N/m, 15 N/m, 20 N/m, 30 N/m, 50 N/m, 60 N/m, 65 N/m, 70 N/m, 75 N/m, or 80 N/m.

In an alternative implementation, the range of F is from 20 N/m to 65 N/m.

The value of cohesive force is generally related to the type and amount of binder in the negative electrode active material layer, and the value of cohesive force may be controlled by selecting different types of binder and adjusting the amount of binder added.

In the present invention, it is preferable that the cohesive force of the negative electrode sheet is 10 N/m to 80 N/m, particularly preferably 20 N/m to 65 N/m. In the case where the cohesive force is high, the stress acting on the negative electrode sheet due to the expansion of the negative electrode active material can be suppressed to some extent, so that the thickness increase rate of the negative electrode sheet is significantly suppressed. In addition, when the cohesive force is high, it also helps to improve the surface rupture and pulverization of the negative electrode active material layer in the negative electrode sheet, thereby reducing the loss of the negative electrode active material, and thus avoiding the consumption of a large amount of electrolyte solution for a new film formation reaction caused by the loss of the negative electrode active material, thereby improving the gas generation of the battery. However, when the value of cohesive force is further increased, a higher amount of binder may be required. Due to the poor conductivity and ion-conducting properties of the binder, the presence of a large amount of binder may lead to a higher resistance value of the electrode sheet, lithium precipitation and other phenomena, affecting the cycle life of the battery.

In the present invention, the method for detecting the cohesive force is not limited. A person skilled in the art would be able to detect the cohesive force of the negative electrode sheet according to conventional technical means. By way of example, it may be detected using the following method.

The electrode sheet of the negative electrode sample was cut into a long electrode sheet with a width of about 25 mm and a length of about 100 mm. The electrode sheet was attached to the stainless steel plate wiped with alcohol. A green adhesive tape with a width of 20 mm was clung to the surface of the electrode sheet. One side of the adhesive tape was pulled up and clamped to an upper end of an universal testing machine. The stainless steel plate with the electrode sheet was clamped on a lower end of the multi-force tensile machine. Then, the test was conducted by the multi-force tensile machine to control the stretching speed to 5 mm/min and the stretching distance to 20 mm. The tensile test data was recorded in the stretching process, in the unit of N/m, with the electrode sheet tested for no less than 3 times. The value of the cohesive force was calculated by taking the average value of test data.

In one of the implementations, the range of p is from 1.3 g/cm$^3$ to 1.8 g/cm$^3$. For example, the p may be 1.3 g/cm$^3$, 1.35 g/cm$^3$, 1.4 g/cm$^3$, 1.5 g/cm$^3$, 1.6 g/cm$^3$, 1.65 g/cm$^3$, 1.7 g/cm$^3$, 1.75 g/cm$^3$ and 1.8 g/cm$^3$.

In an alternative implementation, the range of p is from 1.45 g/cm$^3$ to 1.7 g/cm$^3$.

The higher the compaction density of the negative electrode sheet is, the higher the electron and ion conductivity between the negative electrode active materials is, while the lower the compaction density is, the more developed the pore structure in the negative electrode active material layer of the negative electrode sheet, which facilitates the liquid phase diffusion of ions in the negative electrode pores, and may also lead to accumulate gas generated during the cycle of the battery in the pores. When p is within the above-mentioned preferred range, the battery has both low gas generation and high cycle performance.

With regard to the method for detecting the compaction density, the present invention is not limited, and a person skilled in the art would be able to detect the compaction density of the negative electrode sheet according to conventional technical means.

Exemplarily, the compaction density of the negative electrode sheet may be detected as follows.

With a fully discharged lithium ion battery, a negative electrode sheet was disassembled, washed and dried. The negative electrode sheet was weighed with an area S using an electronic balance, with the weight recorded as $W_1$, and the thickness $T_1$ of the negative electrode sheet measured by a ten-thousandth micrometer. The negative electrode active material layer was washed off by a solvent DMC. The resulted negative electrode current collector was then dried to measure the weight thereof, which was recorded as $W_2$, and measure the thickness $T_2$ thereof by a ten-thousandth micrometer. The weight $W_0$, the thickness $T_0$ and the compaction density $\rho$ of the negative electrode active material layer provided on a side of the negative electrode current collector were calculated by the following equations. If $W_0 = W_1 - W_2$ and $T_0 = T_1 - T_2$, the compaction density $\rho = 1.15 \times W_0/(T_0 \times S)$. It should be noted that there is a certain degree of thickness rebound in the negative electrode sheet in the fully discharged lithium ion battery, and the degree of thickness rebound in the negative electrode sheet using the graphite material as the negative electrode active material is about 15%. Therefore, in the present invention, the compaction density is calculated by multiplying by a factor of 1.15.

In one of the implementations, the range of $\alpha$ is from 20° to 50°. For example, the $\alpha$ may be 20°, 22°, 25°, 30°, 35°, 40°, 43°, 45°, 48° or 50°.

In an alternative implementation, the range of $\alpha$ is from 22° to 31°.

Within the above-mentioned range of $\alpha$, the particle size distribution and the degree of compactness between particles of the negative electrode active material in the negative electrode sheet are suitable, which are helpful for the electrolyte solution to wet the negative electrode sheet quickly and efficiently. Thereby, the gas generation of the battery is relatively less, and the cycle performance is relatively better.

The invention is not limited for the detection method of contact angle $\alpha$. A person skilled in the art may, according to conventional technical means, use vinyl carbonate and methyl ethyl carbonate (weight ratio 1:1) as a solvent to detect the contact angle between the negative electrode active material layer and the solvent. For example, the following methods may be used for detection.

With ethylene carbonate and methyl ethyl carbonate (weight ratio of 1 : 1) as a solvent, a contact angle test is performed for the negative electrode sheet using a JC2000D2M contact angle tester manufactured by Zhongchen Digital Technology Equipment Co. Ltd., Shanghai, and the specific test conditions are as follows. The negative electrode sheet was kept in an environment of 25°C for 30 minutes, and then the solvent was dropped one by one at different positions on the surface of the negative electrode sheet (one drop at each position). The instant at which the drop completely contacted the electrode sheet was observed using the contact angle tester, and the contact angle at this time was calculated. The test results at different positions were averaged to obtain the contact angle of the negative electrode sheet.

In one of the implementations, the negative electrode active material includes a carbon material including at least one of synthetic graphite, natural graphite, hard carbon, soft carbon, and mesocarbon microbeads.

Different carbon materials differ in conductivity, capacity, and cycle stability. Natural graphite and synthetic graphite have higher electrical conductivity, provide better electronic conductivity, have good cycle stability and higher specific capacity, and can provide higher energy storage density. In the present invention, synthetic graphite and/or natural graphite are preferable as the negative electrode active materials.

The method for preparing the negative electrode active material is not particularly limited in the present invention, and a person skilled in the art may prepare the negative electrode active material by conventional means.

Exemplarily, the negative electrode active material may be prepared by the following method.

A graphite raw material was taken for crushing, and the crushed product was ball milled at a ball-to-material ratio of (5-8) : 1 at 300-700 rpm for 1-4h to obtain a particle product.

After the particle product was shaped, the resultant was added into a reaction kettle of a granulator, with amorphous carbon added, for performing granulation treatment to obtain a granulated product.

The granulated product was subject to heat treating, heated from room temperature to 800-1300°C at a heating rate of 1-5°C /min, maintained at the temperature for 2-5h, and then cooled to room temperature, and heated again to 2200-3000°C at a heating rate of 5-10°C/min and maintained at the temperature or 2-10h to obtain graphite particles.

The graphite particles prepared therefrom were crushed, and then sieved and classified by a classification sieve to obtain a negative electrode active material.

In addition, a negative electrode active material having an appropriate particle size change rate may be sieved by a large number of sieving methods.

As for the negative electrode sheet, the present invention does not particularly limit the negative electrode current collector as long as it has high conductivity without causing adverse chemical changes in the battery. For example, copper, stainless steel, aluminum, nickel, titanium, fired carbon, copper or stainless steel surface-treated with one of carbon, nickel, titanium, silver, or the like, or an aluminum-cadmium alloy may be used.

The negative electrode active material layer of the negative electrode sheet may further include a conductive agent and a binder in addition to the negative electrode active material.

The conductive agent functions to improve the conductivity of the negative electrode active material layer. The present invention has no particular limitation on the conductive agent, for example, carbon powders such as carbon black, acetylene black, ketjen black, channel black, furnace black, lamp black or thermal black; graphite powders such as natural graphite or synthetic graphite; conductive fibers such as carbon fibers or metal fibers; or conductive whiskers such as zinc oxide whiskers or potassium titanate whiskers.

The binder serves to enhance adhesion between the conductive agent, the negative electrode active material, and the negative electrode current collector. The binder is not particularly limited in the present invention. For example, at least one of styrene-butadiene rubber (SBR), water-soluble unsaturated resin SR-1B, aqueous acrylic resin (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS) may be used.

In addition, a thickener, which may be carboxymethyl cellulose, may be further included in the negative electrode active material layer.

The weight ratio of the negative electrode active material, the conductive agent, the binder and the thickener in the negative electrode active material layer may be (80-99) : (1-10) : (1-10) : (0-5).

It should be noted that the preparation method of the negative electrode sheet is not particularly limited in the present invention, and a person skilled in the art would prepare the negative electrode sheet according to conventional methods.

Exemplarily, the method for preparing the negative electrode sheet is as follows.

A negative electrode active material and optionally a binder, a conductive agent and a thickener were dissolved or dispersed in a solvent to prepare a negative electrode slurry.

A negative electrode current collector was coated with the negative electrode slurry, and followed by rolling or drying to obtain a negative electrode sheet; or,

the negative electrode slurry was casted on a separate carrier and then the film layer separated from the carrier was laminated on the negative electrode current collector to obtain a negative electrode sheet.

An embodiment of the present invention provides a secondary battery including a positive electrode sheet, a negative electrode sheet which is the above-described negative electrode sheet, and an electrolyte solution.

The positive electrode sheet of the invention includes a positive electrode current collector and a positive electrode active material layer provided on at least one surface of the positive electrode current collector. The positive electrode active material including a positive electrode active material and may also include a conductive agent and/or a binder.

The positive electrode current collector is not particularly limited in the present invention as long as it has high conductivity without causing adverse chemical changes in the battery. For example, copper, stainless steel, aluminum, nickel, titanium, fired carbon, copper or stainless steel surface-treated with one of carbon, nickel, titanium, silver, or the like, or an aluminum-cadmium alloy may be used. The positive electrode current collector may be the same as or different from the negative electrode current collector of the present invention.

The positive electrode active material is a compound capable of reversibly inserting and deinserting lithium. For example, the positive electrode active material may include a lithium composite metal oxide including lithium and at least one metal selected from the group consisting of Mg, Al, Ca, Sc, Ti, V, Cr, Mn, Fe, Co, Ni, Cu, Zn, Ga, Ge, Y, Zr, Sn, Sb, W, Pb and Bi, and preferably at least one selected from the group consisting of Co, Ni, and Mn. Specifically, the positive electrode active material may include at least one of $Li(Ni_{0.6}Mn_{0.2}Co_{0.2})O_2$, $Li(Ni_{0.7}Mn_{0.2}Co_{0.10})O_2$, $Li(Ni_{0.8}Mn_{0.1}C_{0.1})O_2$, $Li(Ni_{0.8}Co_{0.15}Al_{0.05})O_2$, $Li(Ni_{0.86}Mn_{0.07}C_{0.05}Al_{0.02})O_2$, and $Li(Ni_{0.9}Mn_{0.05}Co_{0.05})O_2$.

It should be noted that the method for preparing the positive electrode sheet is not particularly limited in the present invention, and a person skilled in the art would prepare the positive electrode sheet according to conventional methods.

The electrolyte solution of the present invention may be any electrolyte solution suitable in the art for use in electrochemical energy storage devices. The electrolyte solution includes an electrolyte and a solvent. The electrolyte may generally include a lithium salt.

Specifically, the lithium salt includes at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bis-trifluoromethosulfonimide (LiTFSI), lithium triflate (LiTFS), lithium difluorooxalate borate (LiDFOB), lithium dioxalate borate (LiBOB), lithium difluorophosphate ($LiPO_2F_2$), lithium difluorooxalate phosphate (LiDFOP), and lithium tetrafluorooxalate phosphate (LiTFOP). The concentration of the electrolyte in the electrolyte solution may be 0.5 to 5 mol/L.

Specifically, the solvent includes at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1, 4-butyrolactone (GBL), sulfolane (SF), dimethyl sulfone (MSM), methyl ethyl sulfone (EMS), and diethyl sulfone (ESE). The solvent may be present in an amount of 70% to 98% by weight based on the weight of the electrolyte solution.

In addition, an additive may be included in the electrolyte solution. Specifically, the additive may include a negative electrode membrane-forming additive, a positive electrode membrane-forming additive, and may further include an additive capable of improving certain properties of the battery, for example, an additive for improving overcharge properties of the battery, an additive for improving high-temperature properties of the battery or an additive for improving low-temperature properties of the battery, etc.

The secondary battery may further include a separator positioned between the positive electrode sheet and the negative electrode sheet for spacing the positive electrode sheet and the negative electrode sheet and preventing the positive electrode sheet and the negative electrode sheet from contacting and short-circuiting. The separator may be any material known in the art suitable for use as a separator for electrochemical energy storage devices. Specifically, the separator includes at least one of polyethylene, polypropylene, polyvinylidene fluoride, aramid, polyethylene terephthalate, polytetrafluoroethylene, polyacrylonitrile, polyimide, polyamide, polyester, and natural fiber.

An embodiment of the present invention provides an electric device including the above-described secondary battery. The secondary battery serves as a power supply for the electric device.

The electric device refers to any apparatus that may use electrical energy and convert it into one or more of mechanical energy, thermal energy, light energy, etc., such as an electric motor, an electric heat engine, an electric light source, etc. Specifically, the electric device may include, but is not limited to, a mobile device, an electric vehicle, an electric train, a ship and a satellite, an energy storage system, etc. The mobile device may be a mobile phone, a notebook computer, an unmanned aerial vehicle, a sweeping robot, an electronic cigarette, etc. The electric vehicle may be a pure electric vehicle, a hybrid electric vehicle, a plug-in hybrid electric vehicle, an electric bicycle, an electric scooter, an electric golf cart, an electric truck, or the like.

The invention is further illustrated by the following specific embodiments.

In particular embodiments of the present invention, the cohesive force F is detected as follows.

The lithium ion battery was disassembled to obtain a negative electrode sheet. The negative electrode sheet was soaked in dimethyl carbonate (DMC) at room temperature for 60 minutes. The negative electrode sheet was then taken out and dried at room temperature with a humidity of $\leq 15\%$ to obtain a sample electrode sheet to be tested.

A cohesive force test was performed on the sample electrode sheet to be tested. The sample electrode sheet to be tested was cut into a long electrode sheet with a width of about 25 mm and a length of about 150 mm. The electrode sheet was attached to a stainless steel plate wiped with alcohol (industrial grade), with a double-sided adhesive tape of a width of 25 mm and a length of 80 mm clung to the surface of the electrode sheet. At room temperature, 2 kg cylindrical roller was used to press back and forth for 3 times. After pressing, the tape was freely fold by 180°, and the free end of the tape and the test plate were clamped on upper and lower clamps of a tensile machine. At this time, the stripping surface is consistent with the tensile machine line. In the same environment, a tensile machine was used to control the tensile speed as 100 mm/min and the effective tensile distance as 20-80 mm. The tensile test data was recorded during the tensile process, in the unit of N/m. The electrode sheet was tested for no less than 3 times. The value of cohesive force was calculated by taking the average value of test data.

In particular embodiments of the present invention, the particle size change rate ps is detected as follows.

The lithium ion battery was disassembled to obtain a negative electrode sheet. The negative electrode sheet was soaked in dimethyl carbonate (DMC) at room temperature for 60 minutes. The negative electrode sheet was then taken out and dried at room temperature with a humidity of $\leq 15\%$. The negative electrode active material layer on the surface of the current collector was scraped off and was dissolved in an inorganic acid (such as hydrochloric acid), washed, stirred, filtered and dried. The resultant was then dissolved in distilled water, stirred to wash away hydrochloric acid on the surface, and dried to obtain a negative electrode active material.

The negative electrode active material was dispersed in deionized water containing a dispersant (a nonylphenol polyoxyethylene ether with a content of 0.03 wt%) to form a mixture. The mixture was sonicated for 2 minutes, and then placed into a particle size tester to perform a Dv50 test, so as to obtain a Dv50 before holding pressure, which is recorded as a $D_V50_{before}$ pressure.

Then the solid-liquid separation and drying on the mixture containing the negative electrode active material was performed to obtain the negative electrode active material again, and the negative electrode active material was held pressure by a powder compactor under a pressure of 4T for 30 seconds. After the pressure was held, the negative electrode active material was taken out to perform a Dv50 test again in a particle size tester according to the above-mentioned method to obtain a Dv50 after the pressure was held, recorded as $D_V50_{after\ pressure}$. The particle size change rate ps of the negative electrode active material can be obtained by calculation:

$$ps = (D_V50_{before\ pressure} - D_V50_{after\ pressure})/D_V50_{before\ pressure} \times 100\%.$$

In particular embodiments of the present invention, the compaction density $\rho$ is detected as follows.

With a fully discharged lithium ion battery, a negative electrode sheet was disassembled, washed and dried. The negative electrode sheet was weighed with an area S using an electronic balance, with the weight recorded as $W_1$, and the thickness $T_1$ of the negative electrode sheet measured by a ten-thousandth micrometer. The negative electrode active material layer was washed off by a solvent DMC. The resulted negative electrode current collector was then dried to measure the weight thereof, which was recorded as $W_2$ and measure the thickness $T_2$ thereof by a ten-thousandth micrometer. The weight $W_0$, the thickness $T_0$ and the compaction density $\rho$ of the negative electrode active material layer provided on a side of the negative electrode current collector were calculated by the following equations. If $W_0 = W_1 - W_2$ and $T_0 = T_1 - T_2$, the compaction density $\rho = 1.15 \times W_0/(T_0 \times S)$.

In particular embodiments of the present invention, the contact angle $\alpha$ is detected as follows.

With ethylene carbonate and methyl ethyl carbonate (weight ratio of 1 : 1) as a solvent, a contact angle test is performed for the negative electrode sheet using a JC2000D2M contact angle tester manufactured by Zhongchen Digital Technology Equipment Co. Ltd., Shanghai, and the specific test conditions are as follows. The negative electrode sheet was kept in an environment of 25°C for 30 minutes, and then the solvent was dropped one by one at different positions on the surface of the negative electrode sheet (one drop at each position). The instant at which the drop completely contacted the electrode sheet was observed using the contact angle tester, and the contact angle at this time was calculated. The test results at different positions were averaged to obtain the contact angle of the negative electrode sheet.

Examples and Comparative Examples

Each of Examples 1-16 and Comparative Examples 1-3 provides a lithium ion battery, and the specific preparation method thereof is as follows.

(1) Preparation of negative electrode sheet

(1.1) The raw material (petroleum coke raw material) was taken for crushing. The crushed product was ball milled, with the ball milling rate controlled to be $A_1$ rpm, the ball milling time to be $A_1$ h, and the ball-to-material ratio to be 5 : 1, to obtain a particle product.

After the particle product was shaped, the resultant was added into a reaction kettle of a granulator, with 1-5 wt% binder (amorphous carbon) added according to the total weight of the particle product, for performing granulation treatment to obtain a granulated product.

The granulated product was added into a graphitization furnace for heat treatment, heated from room temperature to $B_2$°C at a heating rate of $B_1$°C/min, which was kept for $B_3$ h, then cooled to room temperature, heated again to Bs°C at a heating rate of $B_4$°C/min, which was kept for $B_6$ h, to obtain graphite particles.

The graphite particles prepared therefrom were crushed, and then sieved and classified by a classification sieve to obtain a negative electrode active material.

(1.2) 95 weight parts of negative electrode active material, 1.5 weight parts of conductive agent (carbon black), 1.5 weight parts of thickener (carboxymethyl cellulose, CMC), and 1~5 weight parts of binder (styrene-butadiene rubber, SBR) were mixed. A negative electrode slurry was made by a vacuum mixer by the wet process. The negative electrode slurry was evenly coated on the negative electrode current collector (copper foil). The negative electrode current collector coated with the negative electrode slurry was transferred to an oven for drying, and then rolled and cut. The negative electrode sheet with p of 1.68g/cm$^3$ was obtained by controlling the rolling conditions.

Herein,

the conditions of $A_1$ to $A_2$, $B_1$ to $B_6$ for each Example and Comparative Example are shown in Table 1.

In each of Examples and Comparative Examples, the value of the contact angle $\alpha$ of the negative electrode active material layer provided on the surface of the negative electrode sheet satisfied the value recited in Table 2 by controlling the particle size distribution of the negative electrode active material; the value of the compaction density $\rho$ of the negative electrode sheet satisfied the value shown in Table 2 by controlling the coating and rolling conditions; and by controlling the addition amount of the amorphous carbon and the addition amount of the binder SBR, the value of the cohesive force F of the negative electrode sheet satisfied the value shown in Table 2.

Table 1

|  | $A_1$ (rpm) | $A_2$ (h) | $B_1$ (°C/min) | $B_2$ (°C) | $B_3$ (h) | $B_4$ (°C /min) | $B_5$ (°C) | $B_6$ (h) |
|---|---|---|---|---|---|---|---|---|
| Example 1 | 500 | 1 | 3 | 1100 | 2 | 5 | 2700 | 3 |
| Example 2 | 600 | 2 | 2 | 1200 | 3 | 5 | 2800 | 5 |
| Example 3 | 650 | 2 | 3 | 1300 | 2.5 | 5 | 2700 | 8 |
| Example 4 | 700 | 2 | 5 | 1050 | 4 | 8 | 2400 | 6 |
| Example 5 | 780 | 2.5 | 1 | 900 | 5 | 7 | 2200 | 4 |
| Example 6 | 500 | 1.5 | 1 | 1200 | 4.5 | 5 | 2800 | 8 |
| Example 7 | 680 | 3 | 3.5 | 1050 | 2 | 8 | 2700 | 3 |
| Example 8 | 400 | 1 | 3 | 1100 | 3 | 5 | 2700 | 5 |
| Example 9 | 720 | 1.5 | 4 | 850 | 2.5 | 7 | 2800 | 5 |
| Example 10 | 650 | 2 | 2 | 1200 | 5 | 5 | 2700 | 6 |
| Example 11 | 800 | 1.5 | 3 | 1250 | 5 | 9 | 2700 | 9 |
| Example 12 | 700 | 3 | 2 | 1200 | 3 | 5 | 2900 | 6 |

(continued)

|  | A_1 (rpm) | A_2 (h) | B_1 (°C/min) | B_2 (°C) | B_3 (h) | B_4 (°C /min) | B_5 (°C) | B_6 (h) |
|---|---|---|---|---|---|---|---|---|
| Example 13 | 450 | 1 | 1 | 900 | 4 | 5 | 2500 | 3 |
| Example 14 | 780 | 3 | 1 | 1300 | 4 | 5 | 2900 | 8 |
| Example 15 | 780 | 3.5 | 3.5 | 1000 | 2 | 7 | 2750 | 2 |
| Example 16 | 800 | 4 | 1 | 1200 | 4 | 5 | 2800 | 6 |
| Comparative Example 1 | 450 | 1 | 2 | 800 | 2.5 | 9 | 2400 | 5 |
| Comparative Example 2 | 800 | 3.5 | 4 | 1250 | 5 | 5 | 2750 | 5 |
| Comparative Example 3 | 500 | 1.5 | 1 | 800 | 3 | 6 | 2400 | 4 |

(2) Preparation of positive electrode sheet

The positive electrode active material $Li(Ni_{0.8}Mn_{0.1}Co_{0.1})O_2$, the binder (polyvinylidene fluoride) and the conductive agent (acetylene black) were mixed according to the weight ratio of 98 : 1 : 1. The mixture was added with N-methyl pyrrolidone (NMP) and stirred under the action of vacuum mixer, until the mixing system was formed into a uniform fluidity of positive electrode slurry. The positive electrode slurry was evenly coated on the positive electrode current collector (aluminum foil) with a thickness of 9-12 $\mu$m. After drying (temperature 120°C, time 8hours), rolling and cutting, the positive electrode sheet was obtained.

(3) Preparation of electrolyte solution

The electrolyte solution was a 1.5 mol/L of $LiPF_6$ solution and the solvent was a mixed solution of ethylene carbonate and methyl ethyl carbonate (weight ratio of 1 : 1).

(4) Preparation of separator

A polyethylene film having a thickness of 9 $\mu$m was used as the separator.

(5) Preparation of battery

The prepared positive electrode sheet, separator and negative electrode sheet were wound to obtain a bare electric core without liquid injection. The bare electric core was placed in an outer packaging foil. The above-mentioned prepared electrolyte solution was injected into the dried bare electric core. The same was subjected to vacuum packaging, standing, formation, shaping, sorting and other processes to obtain a lithium ion battery.

Table 2

|  | ps (%) | $\rho$ (g/cm$^3$) | F (N/m) | $\alpha$ (°) | (F*ps)/$\rho$*100 | 1/(ps) +7/$\alpha$ |
|---|---|---|---|---|---|---|
| Example 1 | 11.5 | 1.48 | 25.1 | 22.0 | 1.95 | 0.41 |
| Example 2 | 14.0 | 1.50 | 63.5 | 25.9 | 5.93 | 0.34 |
| Example 3 | 9.2 | 1.7 | 58.3 | 27.2 | 3.16 | 0.37 |
| Example 4 | 9.2 | 1.45 | 45.9 | 31.0 | 2.91 | 0.33 |
| Example 5 | 4.5 | 1.47 | 64.8 | 28.0 | 1.98 | 0.47 |
| Example 6 | 17.0 | 1.76 | 50.8 | 20.0 | 4.91 | 0.41 |
| Example 7 | 5.6 | 1.33 | 72.0 | 43.6 | 3.03 | 0.34 |
| Example 8 | 19.5 | 1.53 | 19.0 | 25.1 | 2.42 | 0.33 |
| Example 9 | 3.8 | 1.31 | 66.0 | 48.9 | 1.91 | 0.41 |
| Example 10 | 13.5 | 1.66 | 28.0 | 30.1 | 2.28 | 0.31 |
| Example 11 | 4.8 | 1.46 | 63.7 | 22.3 | 2.09 | 0.52 |
| Example 12 | 5.0 | 1.60 | 50.0 | 25.0 | 1.56 | 0.48 |

(continued)

|  | ps (%) | ρ (g/cm³) | F (N/m) | α (°) | (F*ps)/ρ*100 | 1/(ps) +7/α |
|---|---|---|---|---|---|---|
| Example 13 | 18.2 | 1.35 | 72.0 | 37.0 | 9.71 | 0.24 |
| Example 14 | 2.2 | 1.80 | 79.5 | 33.9 | 0.97 | 0.66 |
| Example 15 | 1.1 | 1.30 | 39.0 | 27.0 | 0.33 | 1.17 |
| Example 16 | 1.0 | 1.62 | 45.0 | 21.2 | 0.28 | 1.33 |
| Comparative Example 1 | 18.6 | 1.33 | 79.2 | 21.4 | 11.08 | 0.38 |
| Comparative Example 2 | 1.5 | 1.57 | 11.7 | 28.1 | 0.11 | 0.92 |
| Comparative Example 3 | 17.4 | 1.31 | 85 | 42 | 11.29 | 0.22 |

The lithium ion batteries prepared in Examples and Comparative Examples were subjected to performance tests according to the following projects and methods. The results are shown in Table 3.

(1) High temperature storage gas generation: the obtained lithium ion battery was charged at a constant current of a rate of 1C at 25 ± 2°C to 4.25V, and then charged at a constant voltage of 4.25V to a current of less than 0.05C, so that it was in a fully charged state of 4.25V. The volume of fully charged battery was tested by the drainage method before storage and recorded as V0. The fully charged battery was placed in a 60 ± 2°C oven. After 30 days, the battery was taken out to immediately test its volume after storage and record it as V1;

$$\text{Volume expansion rate of battery} = (V1\text{-}V0)/V0 \times 100\%.$$

(2) Thickness expansion rate:

The obtained lithium ion battery was charged to 4.45V at 60°C at a constant current of 0.5C, then charged to 0.05C at a constant voltage. The battery has a first fully charged thickness recorded as W0, standing for 5 minutes, and then discharged to 3.0V at a constant current of 0.5C, which was done for 100 cycles. The fully charged battery thickness after the 100th cycle was recorded as W1. The thickness expansion rate of the active material layer in the negative electrode sheet of the lithium ion battery was calculated by the following equation:

$$\text{Thickness expansion ratio (\%)} = (W1\text{-}W0)/W0 \times 100\%.$$

(3) High temperature cycle life:

High temperature cycle life: the charge/discharge cycle test was performed on the lithium ion battery at 60°C by using a battery charge/discharge tester. The charge/discharge system: the battery was charged to 4.25V at a constant current of 1C, and then charged at a constant voltage until the current dropped to 0.02C, and after standing for 5 minutes, the battery was discharged to 2.5V at a constant current of 1C. The above was one cycle. As the battery cycled, the battery capacity decayed, and the number of cycles experienced when the capacity decayed to 80% of the initial discharge capacity was recorded as the high temperature cycle life of the battery.

Table 3

|  | Volume expansion ratio (%) | Thickness expansion ratio (%) | High temperature cycle life |
|---|---|---|---|
| Example 1 | 1.72 | 27.2 | 2455 |
| Example 2 | 1.75 | 26.5 | 2485 |
| Example 3 | 1.66 | 26.2 | 2475 |
| Example 4 | 1.53 | 26.9 | 2480 |
| Example 5 | 1.73 | 27.5 | 2460 |
| Example 6 | 1.87 | 28.6 | 2445 |
| Example 7 | 1.85 | 29.5 | 2440 |

(continued)

| | Volume expansion ratio (%) | Thickness expansion ratio (%) | High temperature cycle life |
|---|---|---|---|
| Example 8 | 1.91 | 28.4 | 2415 |
| Example 9 | 1.96 | 29.2 | 2430 |
| Example 10 | 2.35 | 31.5 | 2335 |
| Example 11 | 2.27 | 31.8 | 2310 |
| Example 12 | 2.42 | 31.9 | 2300 |
| Example 13 | 2.85 | 34.5 | 2235 |
| Example 14 | 2.78 | 33.8 | 2250 |
| Example 15 | 2.66 | 34.1 | 2245 |
| Example 16 | 2.89 | 34.7 | 2225 |
| Comparative Example 1 | 4.52 | 38.1 | 1710 |
| Comparative Example 2 | 3.95 | 37.8 | 1650 |
| Comparative Example 3 | 3.78 | 38.3 | 1665 |

From the test results in Table 3, it can be seen that the negative electrode sheet prepared in each Example of the present invention was applied to a lithium ion battery. The thickness expansion rate of each of the negative electrode sheets after 100 cycles at 60°C was ≤ 35%. The volume expansion rate of each of the batteries after 30 days of storage at 60°C in a fully charged state was ≤ 3%. The high-temperature cycle life of each of the batteries was ≥ 2200.

From the comparison of Examples 10 to 11 with Examples 1 to 5, when on the basis of that the negative electrode sheet satisfies an equation as follows: $1.9 \leq (F \times ps)/(\rho \times 100) \leq 6$, it further satisfies an equation as follows: $0.33 \leq 1/ps + 7/\alpha \leq 0.5$, the cycle life of the lithium ion battery was relatively higher, the volume expansion rate was relatively smaller, and the thickness expansion rate of the negative electrode sheet was also lower.

According to the comparison between Examples 6 to 9 and Examples 1 to 5, it can be seen that in the case that the negative electrode sheet satisfies the equations: $1.9 \leq (F \times ps)/(\rho \times 100) \leq 6$ and $0.33 \leq 1/ps + 7/\alpha \leq 0.5$, and when ps is 4.5%-14%, p is 1.45-1.7 g/cm$^3$, $\alpha$ is 22°-31° and F is 25 N/m -65 N/m, the cycle performance, gas generation and thickness variation of negative electrode sheet of the prepared battery are relatively better.

The relationship of ps, p and F of the negative electrode sheet produced in each Comparative Example does not satisfy the equation described in the present invention: $0.15 \leq (F \times ps)/(\rho \times 100) \leq 10$. The cycle life of the lithium ion battery using the said negative electrode sheet is only 1710. The gas generation is excessive after high-temperature storage. The thickness expansion rate of the negative electrode sheet is too high after high-temperature cycle.

**Claims**

1. A negative electrode sheet, comprising a negative electrode current collector and a negative electrode active material layer provided on at least one surface of the negative electrode current collector, the negative electrode active material layer comprising a negative electrode active material, **characterized in that** the negative electrode sheet satisfies an equation as follows:

$$0.15 \leq (F \times ps)/(\rho \times 100) \leq 10;$$

in the equation, F is a cohesive force of the negative electrode sheet, a unit is N/m;
ps is a Dv50 particle size change rate of the negative electrode active material before and after holding pressure for 30 seconds at a 4T pressure, a unit is %; and
$\rho$ is a compaction density of the negative electrode sheet, a unit is g/cm$^3$.

2. The negative electrode sheet according to claim 1, **characterized in that** the negative electrode sheet satisfies an equation as follows: $1.9 \leq (F \times ps)/(\rho \times 100) \leq 6$.

3. The negative electrode sheet according to claim 1 or 2, **characterized in that** the negative electrode sheet further satisfies an equation as follows: $0.3 \leq 1/ps+7/\alpha \leq 1.2$;
in the equation, $\alpha$ is a contact angle of the negative electrode active material layer with a solvent, a unit is °, the solvent is a mixed solution of ethylene carbonate and methyl ethyl carbonate in a weight ratio of 1 : 1.

4. The negative electrode sheet according to claim 3, **characterized in that** the negative electrode sheet satisfies an equation as follows: $0.33 \leq 1/ps+7/\alpha < 0.5$.

5. The negative electrode sheet according to claim 1, **characterized in that** a range of ps is from 1% to 20%.

6. The negative electrode sheet according to claim 5, **characterized in that** the range of ps is from 4.5% to 14%.

7. The negative electrode sheet according to claim 1, **characterized in that** a range of F is from 10 N/m to 80 N/m.

8. The negative electrode sheet according to claim 7, **characterized in that** the range of F is from 25 N/m to 65 N/m.

9. The negative electrode sheet according to claim 1, **characterized in that** a range of p is from 1.3 $g/cm^3$ to 1.8 $g/cm^3$.

10. The negative electrode sheet according to claim 9, **characterized in that** the range of p is from 1.45 $g/cm^3$ to 1.7$g/cm^3$.

11. The negative electrode sheet according to claim 1, **characterized in that** a range of $\alpha$ is from 20° to 50°.

12. The negative electrode sheet according to claim 11, **characterized in that** the range of $\alpha$ is from 22° to 31°.

13. The negative electrode sheet according to claim 1, **characterized in that** the negative electrode active material comprises a carbon material comprising at least one of synthetic graphite, natural graphite, hard carbon, soft carbon, and mesocarbon microbeads.

14. A secondary battery, comprising a positive electrode sheet, a negative electrode sheet and an electrolyte solution, **characterized in that** the negative electrode sheet is the negative electrode sheet according to any one of claims 1 to 13.

15. An electric device, **characterized by** comprising the secondary battery according to claim 14.